# EUROPÄISCHE PATENTSCHRIFT

(11) **EP 2 368 473 B1**
(45) Veröffentlichungstag und Bekanntmachung des Hinweises auf die Patenterteilung: **06.04.2016**
(21) Anmeldenummer: 11400007.8
(22) Anmeldetag: 07.01.2011
(51) Int. Cl.: A47L 9/12, A47L 9/00

(54) **Staubsauger mit einem Motorschutzfilter**
Vacuum cleaner with a motor protection filter
Aspirateur avec un filtre de protection du moteur

(30) Priorität: 08.07.2010 DE 102010026441; 23.03.2010 DE 102010012636
(43) Veröffentlichungstag der Anmeldung: 28.09.2011
(73) Patentinhaber: Stein & Co. GmbH, D-42553 Velbert (DE)
(72) Erfinder: Stein, Thomas, 42553 Velbert (DE); Falkenstein, Bernd, 42111 Wuppertal (DE)
(74) Vertreter: Marschall, Stefan

(56) Entgegenhaltungen:
- EP-A2- 2 133 550
- DE-A1-102004 042 237
- GB-A- 2 178 949
- US-A- 3 871 847
- US-A- 5 102 435
- US-A1- 2004 083 573

## Beschreibung

Die Erfindung bezieht sich auf einen Staubsauger mit einem Motorschutzfilter als flächiges Filterelement aus einem Filtervlies zur Aufnahme in einem am Filtergehäuse des Staubsaugers festsetzbaren Filterdeckel sowie einer Luftführung zwischen Filterelement und Filterdeckel zum Motorraum des Staubsaugers, wobei das Filterelement über einen Rahmen im Filterdeckel gehalten wird.

Anordnungen von Motorschutzfiltern dieser Art sind in unterschiedlichen Ausbildungen bekannt. Hierbei besteht der Mangel, dass die Ausbildung der erforderlichen Abdichtungen relativ aufwendig ist und die zwangsläufige Handhabung bei einem Tausch des Motorschutzfilters als Verbindungsteil Schwierigkeiten für den Benutzer macht, um anschliessend eine funktionsbedingte Abdichtung des Filtergehäuses wieder herzustellen. Druckschriftlicher Stand der Technik ist in der US 2004/083573 A1 und in der US 5 102 435 A gezeigt.

Die Aufgabe der Erfindung ist es, einen Staubsauger mit einem Motorschutzfilter mit einem auf das Filtergehäuse dichtend aufsetzbaren Filterdeckel zu schaffen, dessen regelmässiger Austausch einfach zu handhaben ist und eine Abdichtung gewährleistet.

Die Lösung dieser Aufgabe besteht darin, dass der Rahmen des Filterelementes aus einem elastischen Material zur Ausbildung einer Dichtung besteht und der Filterdeckel eine umlaufende Nut zur Aufnahme einer korrespondierenden Feder des Rahmens des Filterelementes zur austauschbaren Anordnung aufweist und die der Feder entgegengesetzte Seite des Rahmens als Dichtungsfläche einer Begrenzungsfläche des Filtergehäuses zum Filterdeckel zugeordnet ist.

Hierdurch wird der Vorteil erzielt, dass mit einer alleinigen Dichtung zwischen An- und Abströmseite des Motorschutzfilters mit dem Filterdeckel und der Gesamtanordnung gegenüber dem Filtergehäuse abgedichtet und gehalten wird. Bei einem Tausch des Motorschutzfilters wird damit auch auf eine einfache Weise die Dichtung zum Filtergehäuse ersetzt und somit die störungsanfällige Dichtung zum Filtergehäuse gleichzeitig ausgetauscht.

Eine vorteilhafte Lösung besteht darin, dass das elastische Material zur Ausbildung einer Dichtung durch einen thermoplastischen Kunststoff gebildet ist.

Ferner ist vorgesehen, dass der umlaufende Rahmen des Filterelementes mit einem unterstützenden elastischen Gerüst aus Streben für das Filtervlies verbunden ist.

Um den Anpressdruck der Dichtung zu erhöhen, wird vorgeschlagen, dass die Nut im Filterdeckel in einer Rippe angeordnet ist, die die Feder des Rahmens aufnimmt und der Rahmen die Breite der Rippe mindestens einseitig überragt.

Zusätzlich wird vorgeschlagen, dass das Filterelement einen Ausschnitt für ein Einfüllelement des Einfüllstutzens aufweist und die Randzone des Ausschnitts als Verstärkungselement ausgebildet ist, das eine Dichtung aus elastischem Material aufweist.

In der Zeichnung ist ein Ausführungsbeispiel der Erfindung schematisch dargestellt. Es zeigen:

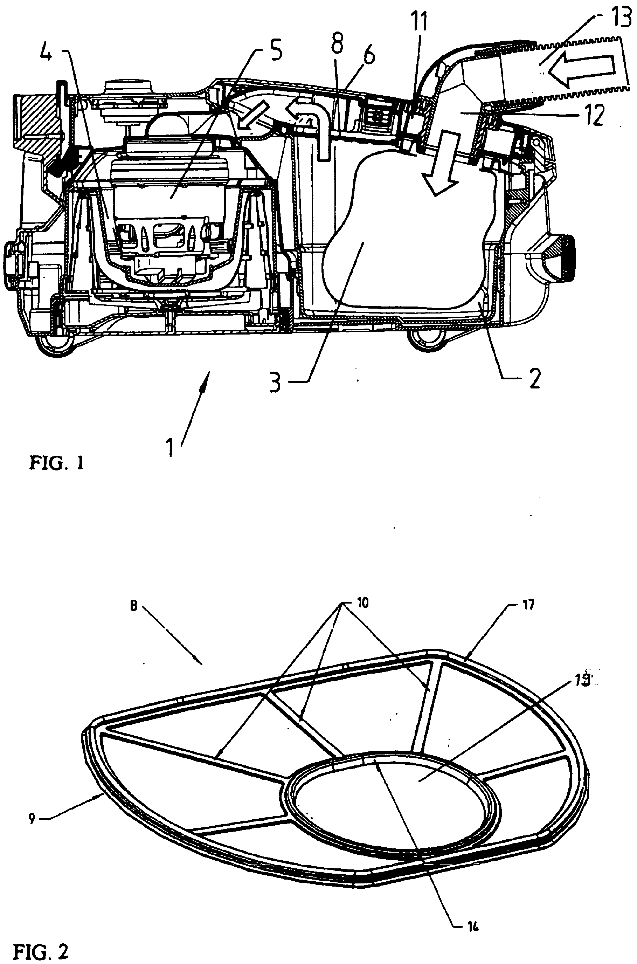

- Fig. 1: eine Schnittdarstellung eines Staubsaugers mit geschlossenem Filterdeckel und einer Luftführung während der Betriebsphase;
- Fig. 2: eine Darstellung des Motorschutzfilters;

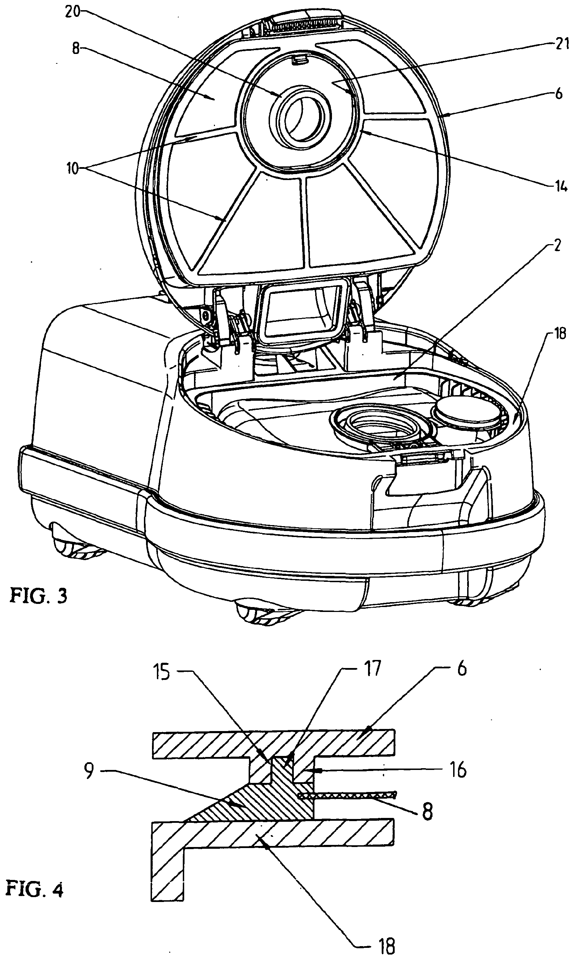

- Fig. 3: eine perspektivische Darstellung eines Filtergehäuses des Staubsaugers mit geöffnetem Filterdeckel und eingesetztem Filterelement und
- Fig. 4: eine prinzipielle Schnittdarstellung des Rahmens eines geschlossenen Filterdeckels mit Auflage auf dem Filtergehäuse bei eingesetztem Motorschutzfilter.

Der dargestellte Staubsauger 1 besitzt ein Filtergehäuse 2 mit einem eingesetzten Filterbeutel 3 und einem abgetrennten Motorraum 4 zur Anordnung eines Motors 5. Das Filtergehäuse 2 ist durch einen zugeordneten abklappbaren und festlegbaren Filterdeckel 6 in bekannter Weise verschliessbar. Der Filterdeckel 6 nimmt unter Bildung eines Luftführungsraumes zum Motor 4 ein Filterelement 8 auf. Dabei ist das Filterelement 8 als Motorschutzfilter grossflächig aus einem Filtervlies gebildet und weist einen umlaufenden Rahmen 9 auf, wobei unterstützendes in dieser Ausbildung zusätzlich ein elastisches Gerüst aus Streben 10 für das Filtervlies angeordnet ist.

Ferner ist in dieser Ausbildung im Filterdeckel 6 ein Halteelement 11 für einen durchgeführten Schlauchstutzen 12 mit einem Schlauchanschluss 13 angeordnet und dem Halteelement 11 ein zugeordneter Ausschnitt 19 im Filterelement 8 mit einem Verstärkungselement 14 .zugeordnet, das eine Dichtlippe trägt. Dem Schlauchstutzen 12 ist dem Halteelement 11 dichtend zugeordnet. Das Halteelement 11 ist dabei einem Einfüllelement 20 dichtend drehbar zugeordnet. Ein Ausschnitt 19 im Filterelement 8 ist hierbei einer Außenfläche 21 des Einfüllelementes 20 dichtend angepaßt. Durch diese Ausbildung ist das Einfüllelement 20 der Einfüllöffnung des Filterbeutels 3 beim Verschließen des Filterdeckels 6 dichtend zugeordnet.

Für eine Abdichtung und Verbindung des Filterelementes 8 und dem Filterdeckel 6 ist der Rahmen 9 aus einem elastischen Kunststoff aus Thermoplast gebildet. Der Filterdeckel 6 besitzt eine umlaufende Nut 15, die in einer Rippe 16 angeordnet ist. In dieser Nut 15 ist eine Feder 1 7 des Rahmens 9 des Filterelementes 8 dichtend einsetzbar. Beim Schliessen des Filterdeckels liegt der Rahmen auf einer korrespondierenden Begrenzungsfläche als Rand 18 des Filtergehäuses 2 dichtend auf. Somit wird durch den Rahmen 9 des Filterelementes 8 mit dem Filterdeckel 6 verbunden und bildet im geschlossenen Zustand des Filterdeckels 6 eine Abdichtung zum Filtergehäuse 2.

## Patentansprüche

1. Staubsauger (1) mit einem Motorschutzfilter als flächiges Filterelement (8) aus einem Filtervlies zur Aufnahme in einem am Filtergehäuse (2) des Staubsaugers (1) festsetzbaren Filterdeckel (6) sowie einer Luftführung zwischen Filterelement (8) und Filterdeckel (6) zum Motorraum (4) des Staubsaugers (1), wobei das Filterelement (8) über einen Rahmen (9) im Filterdeckel (6) gehalten wird, **dadurch gekennzeichnet, dass** der Rahmen (9) des Filterelementes (8) aus einem elastischen Material zur Ausbildung einer Dichtung besteht und der Filterdeckel (6) eine umlaufende Nut (15) zur Aufnahme einer korrespondierenden Feder (17) des Rahmens (9) des Filterelementes (8) zur austauschbaren Anordnung aufweist und die der Feder (7) entgegengesetzte Seite des Rahmens (9) als Dichtungsfläche einer Begrenzungsfläche (18) des Filtergehäuses (2) zum Filterdeckel (6) zugeordnet ist.

2. Staubsauger nach Anspruch 1, **dadurch gekennzeichnet, dass** das elastische Material zur Ausbildung einer Dichtung durch einen thermoplastischen Kunststoff gebildet ist.

3. Staubsauger nach Anspruch 1 oder 2, **dadurch gekennzeichnet, dass** der umlaufende Rahmen (9) des Filterelementes (8) mit einem unterstützenden elastischen Gerüst aus Streben (10) für das Filtervlies verbunden ist.

4. Staubsauger nach einem der Ansprüche 1 bis 3, **dadurch gekennzeichnet, dass** die Nut (15) im Filterdeckel (6) in einer Rippe (16) angeordnet ist, die die Feder (17) des Rahmens (9) aufnimmt und der Rahmen (9) die Breite der Rippe (16) mindestens einseitig überragt.

5. Staubsauger nach einem der Ansprüche 1 bis 4, **dadurch gekennzeichnet, dass** das Filterelement (8) einen Ausschnitt (19) für ein Einfüllelement (20) aufweist und die Randzone des Ausschnitts als Verstärkungselement (14) ausgebildet ist, das eine Dichtung aus elastischem Material aufweist.

## Claims

1. A vacuum cleaner (1) with a motor protection filter as areal filter element (8) made of a filter fleece for being accommodated in a filter lid (6) that can be fixed in a filter housing (2) of the vacuum cleaner (1), and an air shroud between filter element (8) and filter lid (6) towards the motor compartment (4) of the vacuum cleaner (1), wherein the filter element (8) is held in the filter lid (6) via a frame (9), **characterized in that** the frame (9) of the filter element (8) consists of an elastic material for forming a seal and the filter lid (6) comprises a surrounding groove (15) for accommodating a corresponding spring (17) of the frame (9) of the filter element (8) for the exchangeable arrangement and the side of the frame (9) that is opposite to the spring (7) is assigned as sealing face of a boundary face (18) of the filter housing (2) to the filter lid (6).

2. The vacuum cleaner according to Claim 1, **characterized in that** the elastic material for forming a seal is formed by a thermoplastic

3. The vacuum cleaner according to Claim 1 or 2, **characterized in that** the surrounding frame (9) of the filter element (8) is connected to a supporting framework of braces (10) for the filter fleece.

4. The vacuum cleaner according to Claim 1 to 3, **characterized in that** the groove (15) in the filter lid (6) is arranged in a rib (16) which accommodates the spring (17) of the frame (9) and the frame (9) protrudes over the width of the rib (16) at least on one side.

5. The vacuum cleaner according to Claim 1 to 4, **characterized in that** the filter element (8) comprises a cut-out (19) for a filler element (20) and the edge zone of the cut-out is formed as reinforcing element (14), which comprises a seal of elastic material.

## Revendications

1. Aspirateur (1) comportant un filtre de protection du moteur sous forme d'élément de filtration superficiel (8) composé de nous d'un non-tissé filtrant destiné à être reçu dans un couvercle de filtre (6) pouvant être fixé sur le boîtier de filtration (2) de l'aspirateur (1) et un guidage d'air entre l'élément de filtration (8) et le couvercle du filtre (6) en direction du compartiment du moteur (4) de l'aspirateur (1), l'élément de filtration (8) étant maintenu par un cadre (9) dans le couvercle de filtre (6), **caractérisé en ce que** le cadre (9) de l'élément de filtration (8) est composé d'un matériau élastique pour constituer un joint et que le couvercle de filtre (6) présente une rainure périphérique (15) destinée à recevoir une languette correspondante (17) du cadre (9) de l'élément de filtration (8) pour une disposition interchangeable et que la face opposée à la languette (7) du cadre (9) faisant office de surface d'étanchéité est associée à une surface de limitation (18) du boîtier du filtre (2) par rapport au couvercle du filtre (6).

2. Aspirateur selon la revendication 1, **caractérisé en ce que** le matériau élastique est constitué d'une matière thermoplastique pour réaliser un joint.

3. Aspirateur selon la revendication 1 ou 2, **caractérisé en ce que** le cadre périphérique (9) de l'élément de filtration (8) est relié à une cage élastique de soutien constituée de traverses (10) pour le non-tissé filtrant.

4. Aspirateur selon une des revendications 1 à 3, **caractérisé en ce que** la rainure (15) est disposée dans le couvercle de filtre (6) dans une nervure (16) qui reçoit la languette (17) du cadre (9) et que le cadre (9) dépasse d'au moins un côté de la largeur de la nervure (16).

5. Aspirateur selon une des revendications 1 à 4, **caractérisé en ce que** l'élément de filtration (8) présente une échancrure (19) pour un élément de remplissage (20) et que la zone périphérique de l'échancrure se présente sous forme d'un élément de renfort (14) qui présente un joint en matériau élastique.
